# EUROPÄISCHE PATENTSCHRIFT

(11) **EP 2 598 370 B1**
(45) Veröffentlichungstag und Bekanntmachung des Hinweises auf die Patenterteilung: **01.10.2014**
(21) Anmeldenummer: 11748891.6
(22) Anmeldetag: 27.07.2011
(51) Int. Cl.: B60N 2/48

(54) **VERSCHWENKBARE KOPFSTÜTZE**
TILTABLE HEADREST
APPUI-TÊTE RABATTABLE

(30) Priorität: 28.07.2010 DE 102010032677
(43) Veröffentlichungstag der Anmeldung: 05.06.2013
(73) Patentinhaber: Johnson Controls GmbH, 51399 Burscheid (DE)
(72) Erfinder: AKYILDIZ, Alisan, 42579 Heiligenhaus (DE)
(74) Vertreter: Wolff, Felix
(86) Internationale Anmeldenummer: PCT/EP2011/003753
(87) Internationale Veröffentlichungsnummer: WO 2012/013336

(56) Entgegenhaltungen:
- EP-A2- 0 756 964
- WO-A1-01/87666
- WO-A1-2011/130279
- DE-A1- 3 605 774
- DE-A1- 19 830 753
- DE-A1-102005 005 826
- US-A1- 2008 203 801

## Beschreibung

Die vorliegende Erfindung betrifft eine Kopfstütze mit einem Kopfanlageelement, das mit mindestens einer Haltestange insbesondere an der Rückenlehne eines Fahrzeugsitzes vorgesehen ist, wobei das Kopfanlageelement von einer Gebrauchs- in eine Verstaustellung reversibel überführbar und insbesondere in der Gebrauchsstellung verriegelbar ist, wobei sie einen Verriegelungsmechanismus mit einem Verriegelungsmittel aufweist, das zur Verriegelung in eine ortsfeste Ausnehmung eingreift.

Derartige Kopfstützen sind aus dem Stand der Technik bekannt (siehe z.B. US 2008/203801 A1, dem Oberbegriff entsprechend) und werden insbesondere in der zweiten und dritten Reihe eines PKW vorgesehen. Wird der entsprechende Fahrzeugsitz, an dem die gattungsgemäße Kopfstütze vorgesehen ist, nicht benutzt, so ist es vorteilhaft, wenn die Kopfstütze um einen gewissen Winkel, vorzugsweise 90° - 180°, von einer Gebrauchs- in eine Verstaustellung reversibel verbracht werden kann. Zumindest in seiner Gebrauchsstellung, in der das Kopfanlageelement im Wesentlichen vertikal ausgerichtet ist, sollte das Kopfanlageelement verriegelbar sein.

Eine weitere Kopfstütze ist aus der EP 1 190 893 A2 bekannt : Zur Entziegelung dieser Kopfstütze wird eine horizontale Bewegung entlang der Drehachse ausgeführt.

Es war deshalb die Aufgabe der vorliegenden Erfindung, eine Kopfstütze mit einem beweglichen jedoch verriegelbaren Kopfanlageelement zur Verfügung zu stellen, das möglichst einfach aufgebaut ist.

Gelöst wird die Aufgabe mit einer Kopfstütze mit einem Kopfanlageelement mit den Merkmalen des Anspruchs 1. Weiterbildungen der Erfindung sind in den abhängigen Ansprüchen angegeben.

Die vorliegende Erfindung betrifft eine Kopfstütze mit einem Kopfanlageelement, das mit mindestens einer, vorzugsweise zwei Haltemitteln, insbesondere Haltestangen, an der Fahrzeugkarosserie oder an der Rückenlehne eines Fahrzeugsitzes vorgesehen ist. Das Anlageelement derartiger Kopfstützen ist vorzugsweise höhenverstellbar vorgesehen, damit es an die Größe des jeweiligen Sitzinsassen angepasst werden kann. Des Weiteren ist das Kopfanlageelement von einer Gebrauchsstellung, in der das Kopfanlageelement im Wesentlichen vertikal ausgerichtet ist, in eine Verstaustellung reversibel verdrehbar. Vorzugsweise beträgt der Verdrehwinkel von der Gebrauchs- in die Verstaustellung zwischen 90° und 180°.

Insbesondere in seiner Gebrauchsstellung muss das Kopfanlageelement verriegelt sein, so dass es ggf. auftretende Gebrauchs- oder Unfallkräfte aufnehmen kann, ohne seine Stellung zu verändern.

Dafür weist die erfindungsgemäße Kopfstütze einen Verriegelungsmechanismus mit einem Verriegelungsmittel auf, das zur Verriegelung in eine ortsfeste Ausnehmung eingreift. Diese Ausnehmung ist vorzugsweise direkt an dem Haltemittel, vorzugsweise den Haltestangen, vorgesehen. Vorzugsweise ist die Ausnehmung schlitzförmig gestaltet.

Gemäß einer Weiterbildung der vorliegenden Erfindung ist für die Verriegelung ein Verriegelungsmittel vorgesehen, das zur Ver- und Entriegelung eine im Wesentlichen lineare Bewegung durchführt. Das Entriegelungsmittel kann bei dieser Bewegung durch die Ausnehmung und/oder durch eine vorhandene Kulisse geführt werden.

Vorzugsweise ist das Verriegelungsmittel in seine verriegelnde Stellung vorgespannt. Dadurch wird sichergestellt, dass sich das Kopfanlageelement nicht selbsttätig entriegelt.

Gemäß einer weiteren bevorzugten Ausführungsform ist das Verriegelungsmittel mit einem Drehhebel verbunden.

Weiterhin bevorzugt weist die Kopfstütze eine Handhabe auf, die das Verriegelungsmittel bei seiner Entriegelung direkt oder indirekt antreibt. Die anschließende Entriegelung wird dann vorzugsweise durch vorhandene Federmittel angetrieben. Der Fachmann versteht, dass insbesondere die Entriegelung des Kopfanlageelementes auch motorisch oder durch einen sonstigen Antrieb erfolgen kann.

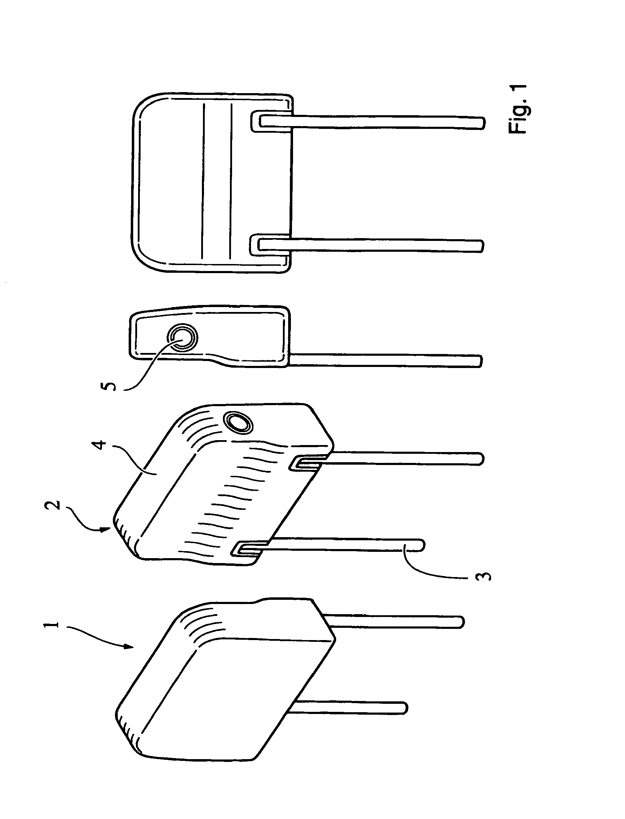

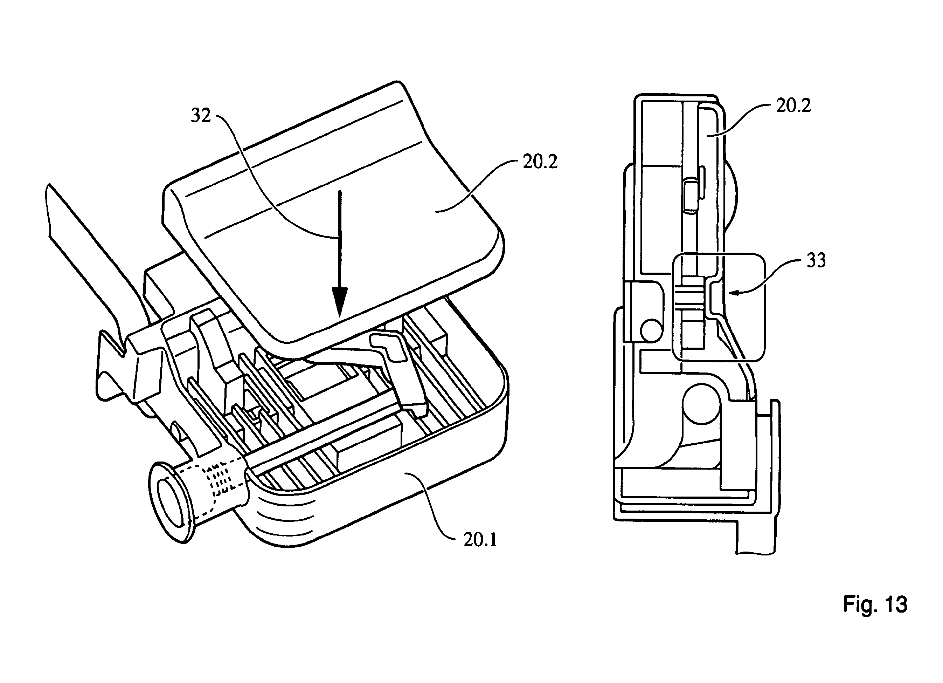

Im Folgenden wird die Erfindung anhand der **Figuren 1 - 13** erläutert. Diese Erläuterungen sind lediglich beispielhaft und schränken den allgemeinen Erfindungsgedanken nicht ein. Die Erläuterungen gelten für den erfindungsgemäßen Gegenstand gleichermaßen, der durch die Merkmale des Anspruchs 1 definiert ist.
- **Figuren 1 und 2**: zeigen die erfindungsgemäße Kopfstütze.
- **Figuren 3 und 4**: zeigen den Ver- / Entriegelungsmechanismus der erfindungsgemäßen Kopfstütze.
- **Figuren 5 und 6**: zeigen die Entriegelung des Verriegelungsmittels.
- **Figuren 7 und 8**: zeigen das Verschwenken der Kopfstütze von der Gebrauchs- in die Verstaustellung.
- **Figur 9**: stellt eine Krafteinleitung auf die erfindungsgemäße Kopfstütze dar.
- **Figuren 10 - 13**: zeigen die Montage der erfindungsgemäßen Kopfstütze.

**Figur 1** zeigt die erfindungsgemäße Kopfstütze 1, die ein Kopfanlageelement 2 und in dem vorliegenden Fall zwei Haltemittel 3, hier Haltestangen 3 aufweist. Die Haltestangen können in der Rückenlehne eines Kraftfahrzeugsitzes oder in der Karosserie, beispielsweise in der Hutablage, gelagert sein. Vorzugsweise ist das Kopfanlageelement 2 höhenverstellbar vorgesehen, insbesondere indem die Haltemittel 3 hinauf und hinunter bewegt werden. Des Weiteren weist die erfindungsgemäße Kopfstütze 1 eine Handhabe 5 auf, die mit einem Ver-/Entriegelungsmechanismus 6 entriegelnd zusammenwirkt, so dass das Kopfanlageelement 2, nachdem die Handhabe 5 betätigt worden ist, aus der dargestellten Gebrauchsstellung, in der das Kopfanlageelement 2 im Wesentlichen vertikal vorgesehen ist, in eine Verstaustellung, in der das Kopfanlageelement 2 beispielsweise um 90° oder mehr im Uhrzeigersinn verdreht worden ist, reversibel verbracht werden kann.

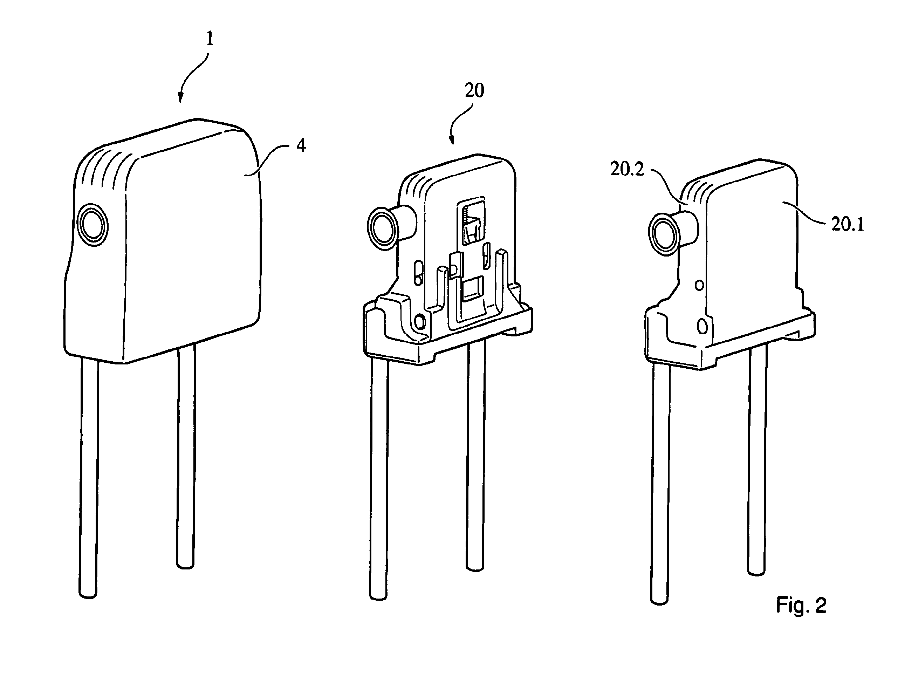

Wie insbesondere **Figur 2** entnommen werden kann, weist das Kopfanlageelement ein Gehäuse 20 auf, das in dem vorliegenden Fall aus einem ersten Gehäuseteil 20.1 und einem zweiten Gehäuseteil 20.2 zusammengesetzt ist. Dieses Gehäuse wird zumindest abschnittsweise von einem Bezug 4, insbesondere einem gepolsterten Bezug, umgeben.

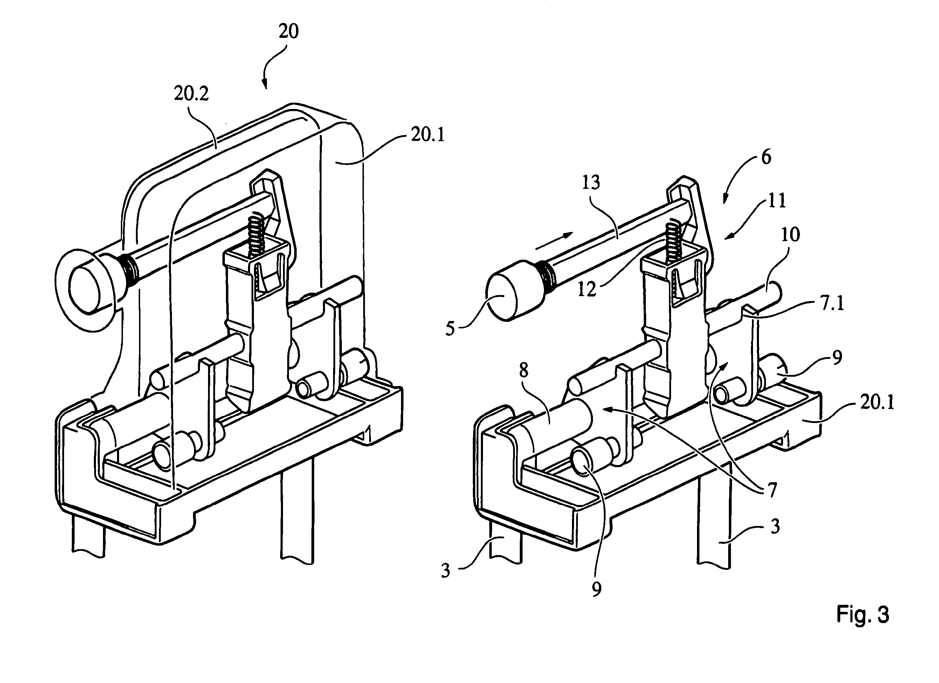

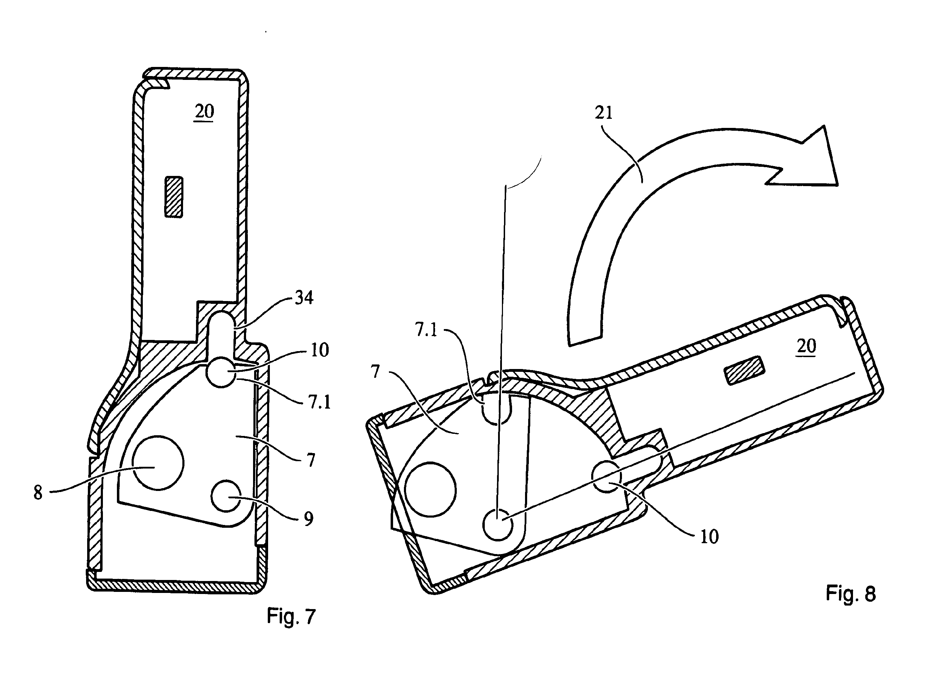

**Figur 3** zeigt den erfindungsgemäßen Ver- / Entriegelungsmechanismus. Wie insbesondere dem rechten Teil von Figur 3 entnommen werden kann, weist die Kopfstütze ein Verbindungsmittel 8 auf, das vorzugsweise einstückig mit den Haltemitteln 3 vorgesehen ist. In dem vorliegenden Fall ist das Verbindungsmittel 8 eine Querverbindung zwischen den beiden Haltestangen 3. An diesem Verbindungsmittel 8 sind zwei beabstandete Lager 7 hier Lochplatten drehfest vorgesehen. Vorzugsweise sind die Lager 7 mit dem Verbindungsmittel 8 verschweißt. In diesem bezogen auf die Haltestangen ortsfesten Lager 7 ist die Drehachse 9 des Kopfanlageelementes 2 drehbar gelagert. Des Weiteren weist das Lager 7 eine Ausnehmung 7.1, hier einen Schlitz, auf, der zur Verriegelung ein Verriegelungsmittel 10 hier eine Verriegelungsstange, form- und/oder kraftschlüssig aufnimmt. In Figur 3 ist die verriegelte Stellung des Verriegelungsmittels 10 dargestellt. Wie insbesondere den Figuren 7 und 8 entnommen werden kann, wird zur Entriegelung das Verriegelungsmittel 10 insbesondere linear aus der Ausnehmung 7.1 reversibel, hier nach oben gegen die Schwerkraft, heraus bewegt. Dafür weist die erfindungsgemäße Kopfstütze einen Betätigungshebel 11, hier einen Drehhebel auf, der mit dem Verriegelungsmittel 10 direkt oder indirekt verbunden ist und der von einer Handhabe 5, die ein Gestänge 13 aufweist zur Entriegelung in der durch den Pfeil dargestellten Richtung angetrieben wird. Des Weiteren weist die erfindungsgemäße Kopfstütze ein Federmittel 12 auf, das das Verriegelungsmittel 10 direkt oder indirekt in seine verriegelnde Stellung vorspannt.

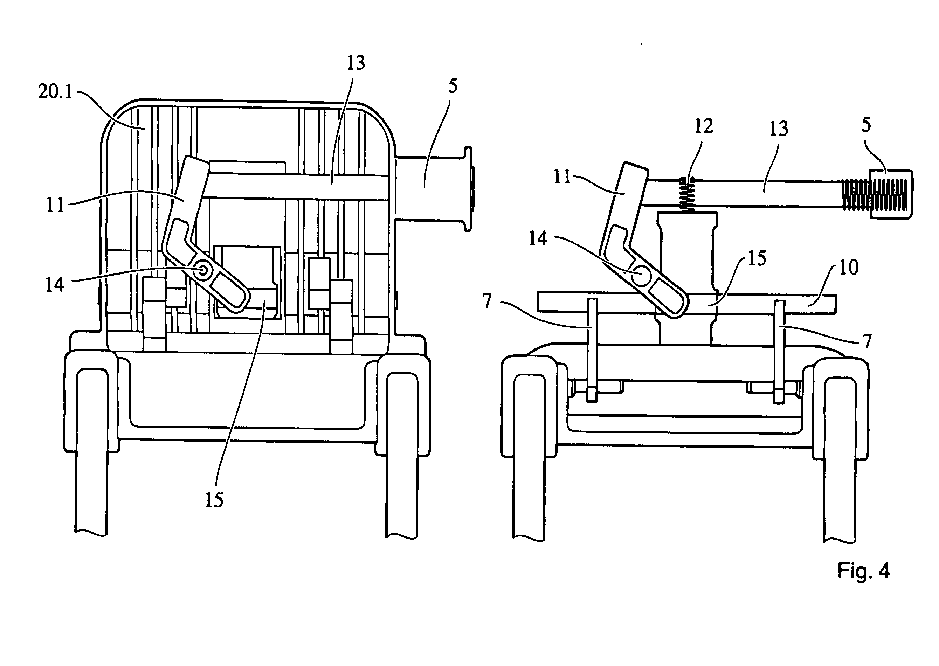

Wie insbesondere **Figur 4** entnommen werden kann, ist der Hebel 11 um eine in dem Gehäuse 20.1 gelagerte Drehachse 14 drehbar vorgesehen. Weiterhin ist aus dieser Darstellung entnehmbar, dass der Drehhebel 11 an seinem einen Ende mit dem Gestänge 13 der Handhabe 5 zusammenwirkt, während sein anderes Ende mit einem Anbindungsmittel 15 zusammenwirkt, das den Drehhebel 11 mit dem Verriegelungsmittel 10 verbindet. Vorzugsweise ist das Verriegelungsmittel 10, hier die Verriegelungsstange, in einer Ausnehmung des Anbindungsmittels 15 eingesteckt. Der Drehhebel wird, vorzugsweise in einer Nut des Anbindungsmittels, drehbar und längsverschieblich an dem Anbindungsmittel 15 geführt.

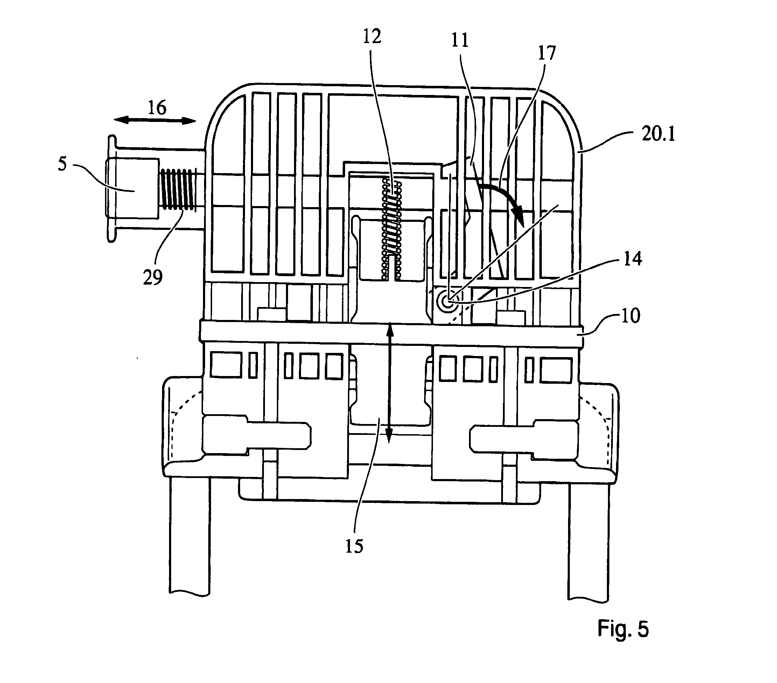

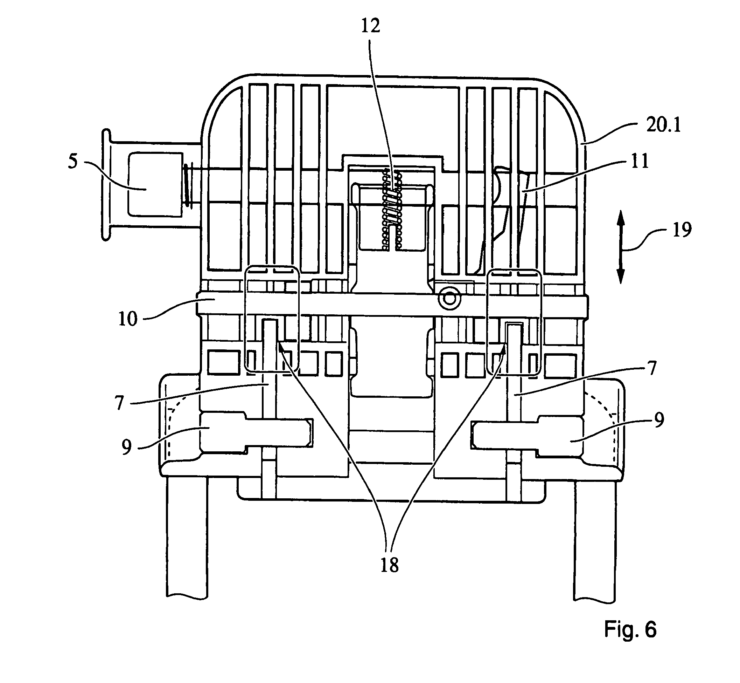

In den **Figuren 5** **und** **6** ist die Entriegelung des Verriegelungsmechanismus 6 dargestellt. Durch eine Betätigung der Handhabe 5 nach rechts (Bezugszeichen 16) wird der Drehhebel 11, wie durch den Pfeil 17 dargestellt, im Uhrzeigersinn um die Drehachse 14 verdreht. Dadurch treibt er das Anbindungsmittel 15 an, das aufgrund der Drehung des Hebels 11 im Uhrzeigersinn eine Bewegung nach oben vollführt und dabei das Verriegelungsmittel 10 mitnimmt und es aus der Ausnehmung 7.1 in dem Lager 7 herauszieht und sich dadurch die Entriegelungsstellung (Bezugszeichen 18) ergibt. Das Kopfanlageelement 2 ist nunmehr um die Drehachse 9 drehbar und kann in eine Verstaustellung verbracht werden. Sobald die Handhabe 5 wieder losgelassen wird, drückt das Federelement 29 die Handhabe 5 und damit das Gestänge 13 in seine ursprüngliche Stellung. Des Weiteren versucht das Vorspannmittel, hier die Spiralfeder 12, das Anbindungsmittel 15 und damit das Verriegelungsmittel 10 in seine verriegelnde Stellung zu drücken. Dies gelingt, sobald sich das Verriegelungsmittel 10 und die Ausnehmung 7.1 überdecken, d. h. sobald sich das Kopfanlageelement in seiner Gebrauchsstellung befindet.

**Figuren 7 und 8** verdeutlichen noch einmal das Entriegeln bzw. das Verdrehen des Kopfanlageelementes von seiner Gebrauchs- in seine Verstaustellung. Figur 7 zeigt die Gebrauchsstellung des Kopfanlageelementes, von dem in dem vorliegenden Fall jedoch nur das Gehäuse 20 dargestellt ist. In dieser Gebrauchsstellung ist das Kopfanlageelement im Wesentlichen vertikal ausgerichtet. Das Lager 7, hier die Lochplatte, ist mit der Querverbindung 8 zwischen den beiden Haltestangen drehfest verbunden. In dem Lager 7 ist die Drehachse 9 des Kopfanlageelementes drehbar gelagert und/oder das Gehäuse 20 ist drehbar um die Drehachse 9 vorgesehen. Dadurch, dass das an dem Gehäuse 20 vorgesehene Verriegelungsmittel 10 in den Schlitz 7.1 form- und/oder kraftschlüssig eingreift, ist das Gehäuse 20 in seiner Gebrauchsstellung drehfest an dem ortsfesten Lager 7 verriegelt. Zur Entriegelung wird das Verriegelungsmittel 10, wie durch den Pfeil dargestellt, aus dem Schlitz 7.1 entfernt und bei seiner Bewegung vorzugsweise in einer in dem Gehäuse 20 vorgesehenen Kulisse 34 geführt. In dieser Stellung wirkt das Verriegelungsmittel 10 nicht mehr verriegelnd mit dem Lager 7 zusammen, so dass das Kopfanlageelement, wie in Figur 8 dargestellt, von seiner Gebrauchsstellung (Figur 7) in seine in Figur 8 dargestellte Verstaustellung entlang des Pfeils 21 verdreht werden kann. Soll das Kopfanlageelement 2 wieder in seine Gebrauchsstellung (Figur 7) zurückgeführt werden, wird das Gehäuse 20 gegen den Uhrzeigersinn solange verdreht, bis das Verriegelungselement 10 die Ausnehmung 7.1 überdeckt. Das Verriegelungselement 10 schnappt dann vorzugsweise selbsttätig, jedoch angetrieben von der Feder 12, in die Ausnehmung 7.1 ein und verriegelt das Kopfanlageelement 2 in seiner Gebrauchsstellung.

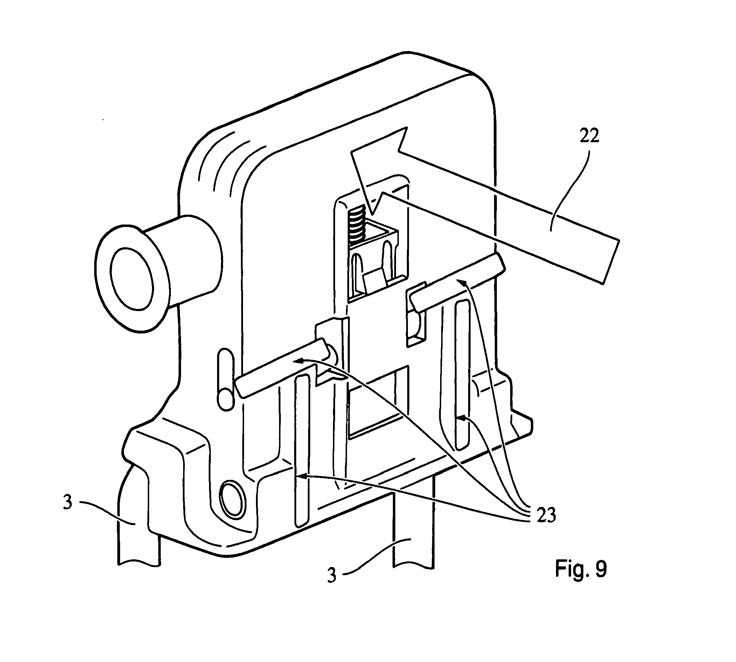

In dieser Gebrauchsstellung werden Kräfte 22 (vgl. Figur 9), die gebrauchs- oder unfallbedingt auf das Kopfanlageelement einwirken, entlang der mit der Bezugsziffer 23 versehenen Flächen des Gehäuses 20 in die Haltemittel 3 der Kopfstütze abgeleitet.

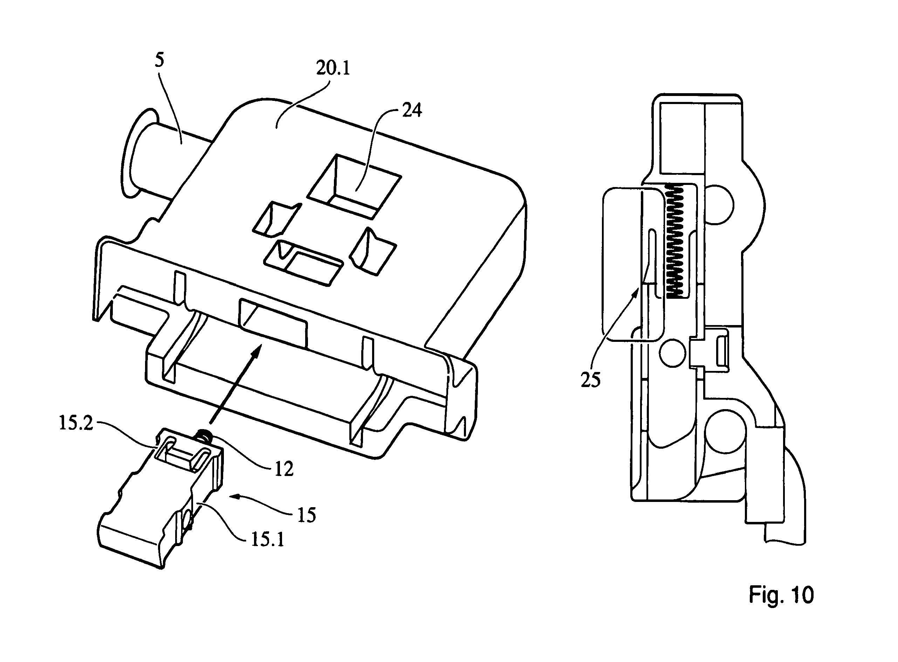

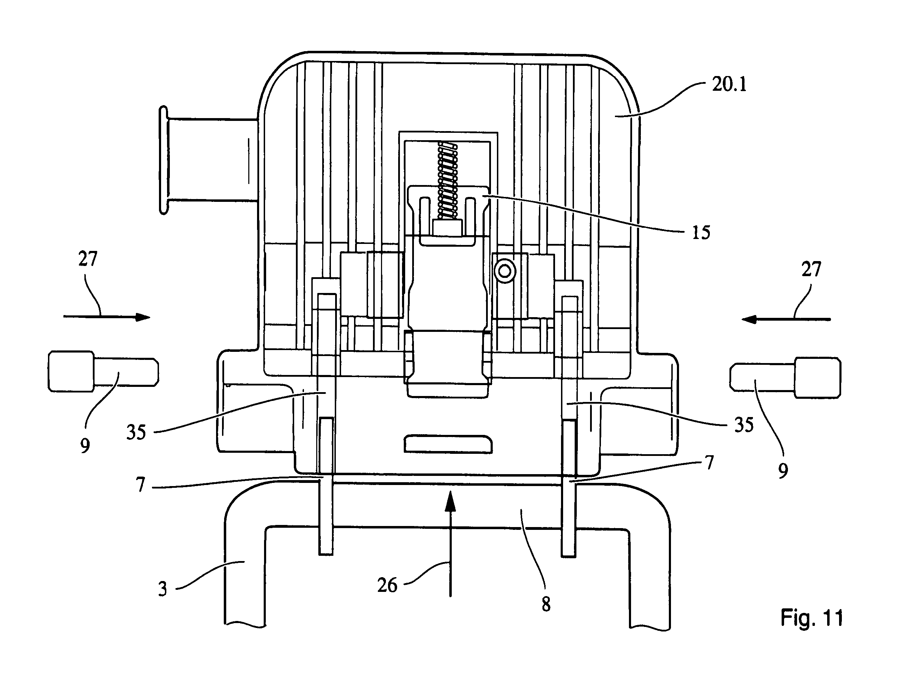

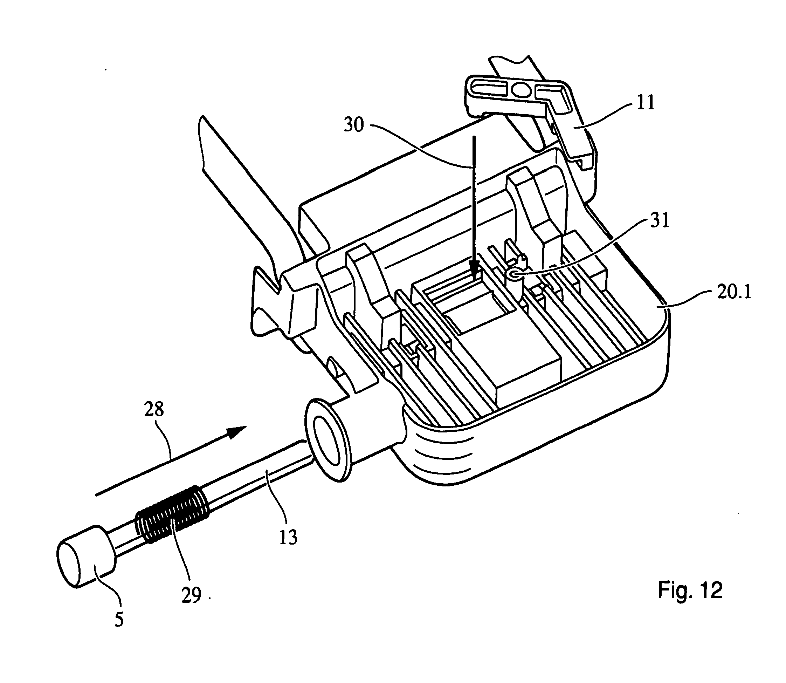

**Figuren 10 - 13** zeigen die Montage der erfindungsgemäßen Kopfstütze. Zunächst wird in das erste Gehäuseteil 20.1 das Anbindungsmittel 15, an dem bereits das Vorspannmittel hier die Spiralfeder 12 angeordnet ist, in einen Kanal 24 eingesteckt. Das Anbindungsmittel 15 weist eine Ausnehmung 15.1 auf, in die das stangenförmige Verriegelungsmittel 10 einsteckbar ist. Des Weiteren weist das Anbindungsmittel 15 ein Rastmittel 15.2 auf, das mit einer Ausnehmung 25 an dem Gehäuseteil 20.1 rastend zusammenwirkt und verhindert, dass das Anbindungsmittel 15 selbsttätig wieder aus dem Kanal 24 herausrutscht. **Figur 11** zeigt die Anbindung des Gehäuses 20.1 an die Haltemittel der erfindungsgemäßen Kopfstütze. Die an der Querverbindung 8 angeschweißten Lager 7 werden in Schlitze 35, die in dem Gehäuse 20.1 vorgesehen sind, eingesteckt und in dieser Lage durch die beiden Drehachsen 9, die wie durch den Pfeil 27 dargestellt ebenfalls in das erste Gehäuseteil 20.1 eingeführt werden, gesichert. Sodann wird wie in **Figur 12** dargestellt der Hebel 11 an dem Gehäuse 20.1 vorgesehen, indem die Drehachse 14 in eine Ausnehmung 31 des Gehäuses 20.1 eingesteckt wird. Außerdem wird das Gestänge 13 der Handhabe 5, wie durch Pfeil 28 symbolisiert, in das erste Gehäuseteil 20.1 eingeführt. Danach wird das zweite Gehäuseteil 20.2 wie durch den Pfeil 32 dargestellt an dem ersten Gehäuseteil 20.1 befestigt. Das zweite Gehäuseteil 20.2 liegt an dem Hebel 11 an oder weist zu diesem einen sehr geringen Abstand zu diesem auf und sichert somit die Drehachse 14 in der Ausnehmung 31.

### Bezugszeichenliste:

- 1: Kopfstütze
- 2: Kopfanlageelement
- 3: Haltemittel, Haltestange
- 4: Bezug
- 5: Handhabe
- 6: Ver-, Entriegelungsmechanismus
- 7: Lager, Verriegelungslager
- 7.1: Ausnehmung, Schlitz
- 8: Verbindungsmittel, Achse, Querverbindung
- 9: Drehachse, Welle
- 10: Verriegelungsmittel
- 11: Hebel, Betätigungshebel
- 12: Vorspannmittel
- 13: Gestänge
- 14: Drehlager des Hebels 11
- 15: Anbindungsmittel
- 15.1: Ausnehmung für das Verriegelungsmittel 10
- 15.2: Rastmittel
- 16: Bewegung der Handhabe 5
- 17: Bewegung des Hebels 11
- 18: Entriegelungsstellen
- 19: Bewegung des Verriegelungsmittels
- 20: Gehäuse
- 20.1: erster Teil des Gehäuses
- 20.2: zweiter Teil des Gehäuses
- 21: Drehbewegung des Gehäuses
- 22: Krafteinleitung durch den Kopf des Sitzinsassen
- 23: Stellen, die die Kraft 22 aufnehmen
- 24: Kanal
- 25: Ausnehmung, Raststelle
- 26: Montagerichtung der Lager 7
- 27: Montagerichtung der Drehachse 9
- 28: Montagerichtung der Handhabe 5
- 29: Federmittel
- 30: Montagerichtung des Hebels 11
- 31: Ausnehmung für die Drehachse des Hebels 11
- 32: Montagerichtung des zweiten Teils des Gehäuses
- 33: Arretierung des Hebels 11 durch den zweiten Teil des Gehäuses
- 34: Kulisse
- 35: Schlitz

## Patentansprüche

1. Kopfstütze (1) mit einem Kopfanlageelement (2), das mit mindestens einem Haltemittel (3), insbesondere an der Rückenlehne eines Fahrzeugsitzes, vorgesehen ist, wobei das Kopfanlageelement (2) von einer Gebrauchs- in eine Verstaustellung reversibel überführbar und insbesondere in der Gebrauchsstellung verriegelbar ist, wobei sie einen Verriegelungsmechanismus (6) mit einem Verriegelungsmittel (10) aufweist, das zur Verriegelung in eine ortsfeste Ausnehmung (7.1) eingreift, **dadurch gekennzeichnet, dass** an dem Haltemittel (3) zwei bezüglich des Haltemittels (3) ortsfeste, beabstandete Lager (7) vorgesehen sind, in denen eine Drehachse (9) des Kopfanlageelementes drehbar gelagert ist, wobei jedes Lager (7) eine ortsfeste Ausnehmung (7.1) aufweist, wobei sich das Verriegelungsmittel (10) zur Entriegelung nach oben gegen die Schwerkraft bewegt, wobei das Verriegelungsmittel (10) in die verriegelnde Stellung vorgespannt ist.

2. Kopfstütze nach Patentanspruch 1, **dadurch gekennzeichnet, dass** für die Verriegelung ein Verriegelungsmittel (10) vorgesehen ist, das zur Ver- und Entriegelung eine im Wesentlichen lineare Bewegung durchführt.

3. Kopfstütze nach einem der voranstehenden Ansprüche, **dadurch gekennzeichnet, dass** sie einen Drehhebel (11) aufweist, der mit dem Verriegelungsmittel (10) verbunden ist.

4. Kopfstütze nach einem der voranstehenden Ansprüche, **dadurch gekennzeichnet, dass** sie eine Handhabe (5) aufweist, die das Verriegelungsmittel (10) bei der Entriegelung antreibt.

## Claims

1. Headrest (1) having a head bearing element (2) which is provided with at least one holding means (3), in particular on the backrest of a vehicle seat, such that the head support element (2) can be reversibly transferred from a use to a stowed position and in particular can be locked in the use position, such that it comprises a locking mechanism (6) with a locking device (10), which engages for locking in a fixed recess (7.1), **characterised in that** the holding device (3) comprises two fixed bearings (7) spaced relative to the supporting device (3), in which an axis of rotation (9) of the headrest element is rotatably mounted, with each bearing (7) having a fixed recess (7.1), such that the locking device (10) moves upwards against gravity for unlocking and the locking device (10) is tensioned into the locking position.

2. Headrest according to claim 1, **characterised in that** a locking device (10) is provided for locking, which performs a substantially linear movement for locking and unlocking.

3. Headrest according to any one of the above claims, **characterised in that** it comprises a rotary lever (11) which is connected to the locking device (10).

4. Headrest according to any one of the above claims, **characterised in that** it comprises a handle (5) which drives the locking device (10) during unlocking.

## Revendications

1. Appuie-tête (1) comprenant un élément repose-tête (2) qui est conçu avec au moins un moyen de retenue (3), en particulier sur le dossier d'un siège de véhicule, l'élément repose-tête (2) pouvant être passé de manière réversible d'une position d'utilisation à une position de rangement et étant en particulier verrouillable en position d'utilisation, tout en présentant un mécanisme de verrouillage (6) doté d'un moyen de verrouillage (10) qui s'engrène pour le verrouillage dans un évidement fixe (7.1), **caractérisé en ce qu'**il est prévu sur le moyen de retenue (3) deux paliers (7) espacés et fixes par rapport au moyen de retenue (3) dans lesquels un axe de rotation (9) de l'élément repose-tête (2) s'appuie en rotation, chaque palier (7) présentant un évidement fixe (7.1), le moyen de verrouillage (10) se déplaçant vers le haut à l'inverse de la force de gravité pour le déverrouillage, le moyen de verrouillage (10) étant précontraint en position de verrouillage.

2. Appuie-tête selon la revendication 1, **caractérisé en ce qu'**il est prévu pour le verrouillage un moyen de verrouillage (10) qui exécute pour le verrouillage et le déverrouillage un mouvement sensiblement linéaire.

3. Appuie-tête selon une des revendications précédentes, **caractérisé en ce qu'**il présente un levier rotatif (11) qui est relié au moyen de verrouillage (10).

4. Appuie-tête selon une des revendications précédentes, **caractérisé en ce qu'**il présente une manette (5) qui entraîne le moyen de verrouillage (10) lors du déverrouillage.
